# EUROPEAN PATENT SPECIFICATION

(11) **EP 4 411 420 B1**
(45) Date of publication and mention of the grant of the patent: **18.11.2026**
(21) Application number: 23154499.0
(22) Date of filing: 01.02.2023
(51) Int. Cl.: G01S 17/931, G05D 1/00, G01S 7/48, G01S 17/89

(54) **METHOD AND SYSTEM FOR OBJECT DETECTION IN LIDAR GENERATED 3D POINT CLOUDS**
VERFAHREN UND SYSTEM ZUR OBJEKTERKENNUNG IN LIDAR-ERZEUGTEN 3D-PUNKTWOLKEN
PROCÉDÉ ET SYSTÈME DE DÉTECTION D'OBJET DANS DES NUAGES DE POINTS 3D GÉNÉRÉS PAR LIDAR

(43) Date of publication of application: 07.08.2024
(73) Proprietor: Aptiv Technologies AG, 8200 Schaffhausen (CH)
(72) Inventor: MAOZ, Ori, 10717 Berlin (DE); ZIMMERMANN, Urs, 47807 Krefeld (DE); SIEGEMUND, Jan, 50825 Köln (DE); ALSFASSER, Martin, 42853 Remscheid (DE)
(74) Representative: Bardehle Pagenberg Partnerschaft mbB Patentanwälte Rechtsanwälte

(56) References cited:
- KR-A- 20200 085 436
- US-A1- 2019 324 147
- US-B1- 11 151 782

## Description

### Field of the invention

The present application relates to the field of range sensors, such as LiDAR sensors, and more particular to a method, a system and a computer-readable storage medium for object detection in a 3D point cloud representing a scanned surrounding of a vehicle.

### Background

In the field of automotive advanced safety and autonomous driving, ranging sensors such as LiDAR sensors are employed in order to allow vehicles to perceive their surroundings. The ranging sensors are used to build a map of their surrounding by measuring the time required for a laser beam to be reflected from surrounding objects. Most LiDAR sensors work by horizontally spinning a top-mounted array of lasers, for repeatedly constructing a 3D point cloud of the reflected points. Although each 3D point is measured at an individual timestamp, usually the whole scan of a total 360 degree scan cycle is assigned to a common point in time for further processing of the generated 3D point cloud. In other words, it is implicitly assumed the whole 3D point cloud is a snapshot capturing a single point in time, rather than a dynamic sweep. In contrast to a real snapshot, the vehicle and objects in the scene may move while the laser is scanning, resulting in some distortions in the aggregated 3D point cloud.

More particularly, data resulting of a 360-degree LiDAR scan and aggregated into a 3D point cloud will suffer from particularly strong distortions in the area where the start of the scan meets the end of the scan. The sensors would have to perform an almost entire 360 sweep before measuring neighboring start and end spots, which typically results in a delay of, e.g., 100 ms when scanning with 10 Hz between the respective measurement times. This can lead to a significant deformation of the scanned points in that area, and at least partial duplication or omission of fast moving objects. In particular, when aggregating the measurements of a spinning LiDAR sensor into a 3D point cloud representing a 360 degree scan, there would always be a line where the first of the aggregated samples is adjacent to the last aggregated sample. This line may be denoted as "scanning discontinuity" of the LiDAR scan, and it is particularly susceptible to distortions and artifacts.

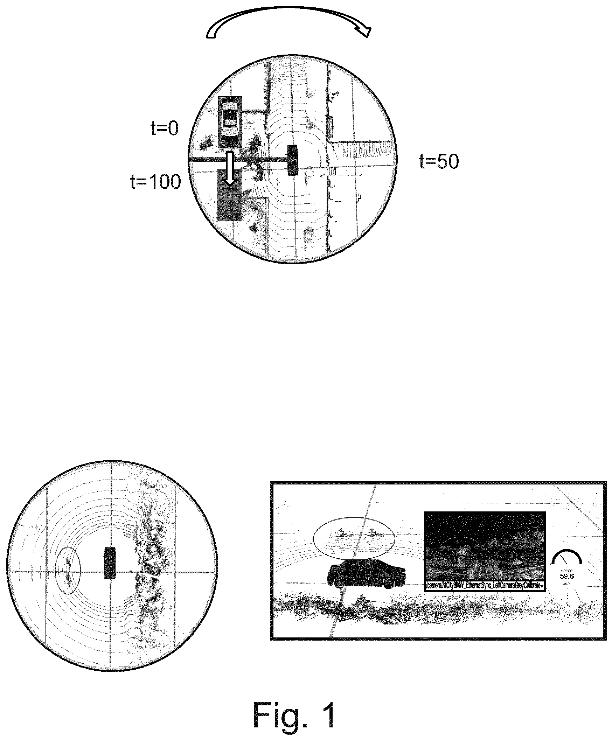

A typical problem that may occur near the discontinuity is shown in Fig. 1. After a moving object in the scene is captured by the scanning LiDAR sensor at the beginning of the scan, it may move into the area at the end of the scan and be captured again within the same scanning pass. Conversely, an object moving in the other direction may avoid the scanning laser altogether and may not be captured at all. Such duplicate, or missing, objects would not only affect automatic object detectors, but may even confuse a manual labeler tasked to create annotated ground truth used as training data for these detectors.

While the deformation of static points in a 3D point cloud may be compensated for to a certain degree by taking into account the motion of the egovehicle (i.e. the vehicle carrying the LiDAR scanner), scanning discontinuity resulting of moving objects is still an issue, as the motion trajectory of a moving object is difficult to predict.

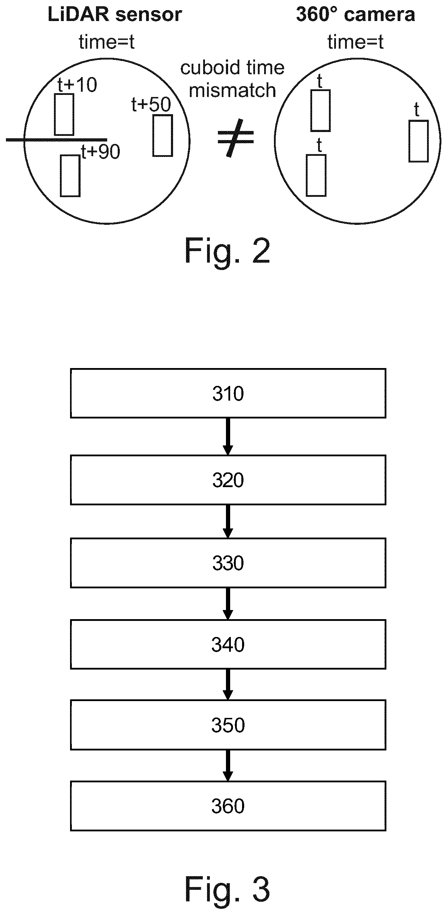

A further problem that arises with aggregated LiDAR scans is the timing of detections, as shown in Fig. 2. Because of the time taken to aggregate a full 360 degree scan, the positions of objects at different scanning angles from the egovehicle would be measured at different times. Naively processing the entire scene with a LiDAR-based object detector would produce detections that are treated as if they were actually measured at the same time. This would cause a mismatch when comparing or fusing these detections to those of another sensor, e.g., a 360 degree camera, in which the objects are measured at their actual times.

As a still further aspect, computer vision algorithms as used for further processing 3D point clouds usually require large areas of aggregated 3D points in order to be effective and employ contextual information. More importantly, known approaches usually expect entire aggregated 3D point clouds. Furthermore, LiDAR sensors are often designed in such a way that they already provide the data aggregated into entire scans rather than a temporal stream of single 3D points.

US 2019/324147 A1 relates to a LIDAR system for use in a vehicle for detecting angles of objects.

KR 2020 0085436 A discloses a LIDAR system for object recognition using a background estimation technique.

US 11 151 782 B1 relates to generating digital images of a site having a structure with superimposed intersecting grid lines and annotations.

Accordingly, there is a need for improved systems and methods for determining 3D point clouds with LiDAR sensors and detecting objects in the aggregated LiDAR data in scenarios including both static and moving objects while avoiding the above discussed problems.

### Summary of the invention

The invention is defined in the appended independent claims. Advantageous embodiments of the invention are defined in the dependent claims.

One aspect of the present invention relates to a computer-implemented method for object detection in a three-dimensional, 3D, point cloud representing a scanned surrounding of a vehicle. The method comprises determining a first plurality of scanning samples representing the scanned surrounding, the first plurality of scanning samples consisting of a first half of scanning samples and a second half of scanning samples. The method further comprises populating the 3D point cloud with the first plurality of scanning samples. The method further comprises detecting objects in the 3D point cloud contained in one or more of the second half of scanning samples. A scanning discontinuity is present in the first half of the scanning samples between a first scanning sample and a last scanning sample, wherein the scanning discontinuity is a line where the first scanning sample is adjacent to the last scanning sample. The method further comprises determining a second plurality of scanning samples, and populating the 3D point cloud with a restitched plurality of scanning samples. The restitched plurality of scanning samples consisting of a subset of the first plurality of scanning samples and a subset of the second plurality of scanning samples, and the location of the scanning discontinuity in the restitched plurality of scanning samples is shifted by an angle *theta* compared to the first plurality of scanning samples. The method further comprises detecting objects in the 3D point cloud contained in one half of the restitched plurality of scanning samples which is unaffected by the scanning discontinuity.

The invention allows to restitch two consecutive LiDAR scans such that the discontinuity in the 3D point cloud is shifted by an arbitrary angle, and to perform object detection only in those restitched scanning samples which are contained in that half of the restitched scanning samples which is unaffected by the scanning discontinuity. Since the detecting of objects is performed in in one or more of the second half of scanning samples, the scanning discontinuity and corresponding issues as discussed above are avoided.

In an embodiment, the second plurality of scanning samples were acquired immediately after the first plurality of scanning samples, and the shifted discontinuity is located in a first half or in a second half of the restitched plurality of scanning samples, depending on the angle *theta.*

A further embodiment defines the restitching process in more detail. Each of the first plurality of scanning samples and the second plurality of scanning samples is assigned a measurement time. The subset of the scanning samples in the first plurality of scanning samples has an assigned measurement time greater or equal to a first value, and the subset of the scanning samples in the second plurality of scanning samples has an assigned measurement time less than a second value.

According to a further embodiment, the first value is greater or equal to $t {1}_{start} + \left(t{2}_{start}-t{1}_{start}\right) ∗ \left(\frac{theta}{360}\right) ,$ and the second value is less than $t {2}_{start} + \left(t{3}_{start}-t{2}_{start}\right) ∗ \left(\frac{theta}{360}\right) ,$ wherein
- *t*1_*start* denotes the measurement time of the first scanning sample of the first plurality of scanning samples,
- *t*2*_start* denotes the measurement time of the first scanning sample of the second plurality of scanning samples,
- *t*3*_start* denotes the measurement time of a first scanning sample of a third plurality of scanning samples, wherein the third plurality of scanning samples were acquired immediately after the second plurality of scanning samples, and
- the angle *theta* is specified in degrees.

In a further embodiment, only a portion of the one half of the restitched plurality of scanning samples which is unaffected by the scanning discontinuity is considered for detecting objects.

In a further embodiment, the portion covers a 90° cone in the center of the one half of the restitched plurality of scanning samples which is unaffected by the scanning discontinuity.

Regarding advantages of this embodiment, when using only half of a 3D point cloud, i.e., of the restitched plurality of scanning samples, boundary effects may be encountered at the edge of the half, such as cropped objects. The embodiment allows to circumvent such boundary effects, as object detection is applied on the complete half which is unaffected by the scanning discontinuity, but only detections within a 90-degree cone in the center of the halved plurality of scanning samples are considered.

In a further embodiment, detected objects are aggregated into a set of detected objects.

In a further embodiment, each of the detected objects is assigned a common point in time.

In an alternative embodiment, each of the detected objects is assigned a point in time corresponding to a point in time at which the restitched plurality scanning samples in the respective portion were obtained.

Accordingly, in this embodiment the detections in different quadrants are treated separately. As a result, object detections alternate between the quadrants, at separate time. These separate detections may then be combined into a coherent world view. By keeping the detections from each quadrant separate, and assigning a common time only to object within a quadrant rather than the whole scene, the time mismatch between a detection and the actual measurement time would be reduced.

In an embodiment, detecting objects is performed automatically, e.g., by using an object detection algorithm.

In an alternative embodiment, detecting objects is performed by a user, i.e., manually, e.g., during an annotating process.

In a further embodiment, the method further comprises receiving a user input by the user, and selecting the angle *theta* in response to the user input.

In a further embodiment, the angle *theta* is selected such that the scanning discontinuity is shifted away from the one half of the restitched plurality of scanning samples in which the user is performing object detection.

Accordingly, the user can shift the discontinuity to his needs regarding object detection, to avoid any confusion resulting of the scanning discontinuity.

In a further embodiment, the user input comprises shifting of a slider in a user interface, and wherein the angle *theta* is selected based on the shifting.

This embodiment provides an annotating user with a convenient way of shifting the discontinuity to a desired portion of the 3D point cloud.

Another aspect of the present invention relates to system comprising means for performing the steps of the above described method.

Still another aspect of the present invention relates to a computer-readable storage medium comprising instructions which, when executed by a computer, cause the computer to carry out the above described method.

### Brief description of the drawings

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: illustrates an example of a LiDAR scan with a scanning discontinuity and resulting deformation of the scanned points in that area;
- Fig. 2: illustrates an example of timing mismatches for objects in a LiDAR scan;
- Fig. 3: illustrates a method for object detection in a three-dimensional, 3D, point cloud representing a scanned surrounding of a vehicle, according to embodiments;
- Fig. 4: illustrates an example of the method for object detection in a three-dimensional, 3D, point cloud representing a scanned surrounding of a vehicle, according to embodiments;
- Fig. 5: illustrates an example of the proposed restitching of two consecutively recorded LiDAR scans, according to embodiments;
- Fig. 6: illustrates an example of restitching several consecutive LiDAR scans, according to embodiments;
- Fig. 7: illustrates an example of shifting the scanning discontinuity in a LiDAR scan by different angles, according to embodiments;
- Fig. 8: illustrates an example of object detections in portions of the unaffected halves of respective restitched LiDAR scans;
- Fig. 9: illustrates an embodiment wherein objects are detected in alternating quadrants; and
- Fig. 10: illustrates an example of a manual annotating process, according to embodiments.

### Detailed description

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the scope of the disclosure.

LiDAR sensors are employed in order to allow vehicles to perceive their surroundings. Data resulting of a 360-degree LiDAR scan is typically aggregated into a 3D point cloud, which can be fed into object detection algorithms such as computer vision algorithms to detect objects in the surrounding of a vehicle.

However, known computer vision algorithms rely on, e.g., convolutional neural networks, and require large areas of aggregated 3D points in order to be effective and employ contextual information. More importantly, known computer vision approaches expect entire aggregated 3D point clouds. Furthermore, LiDAR sensors are often designed in such a way that they already provide the data aggregated into entire scans rather than a temporal stream of single points. Since known LiDAR sensors provide entire 3D point clouds as output, and similarly, known computer vision algorithms expect entire 3D point clouds as input, solutions are required which would allow to employ known LiDAR sensors and known computer vision algorithms while still avoiding the above discussed issues, such as artifacts that appear within the scan discontinuity. The present invention provides a corresponding solution.

More particularly, the present invention relates to a step of preprocessing LiDAR data that enables the usage of software tools for processing LiDAR data which require large-scale point clouds, while avoiding the scanning discontinuity that arises every time the output of a scanning lidar is aggregated into a 360 degree scan. According to the present invention, the processing of a 3D point cloud comprising aggregated LiDAR data is subdivided into local sub processing portions. LiDAR scans are repeatedly dynamically "restitched" to move the scanning discontinuity within a LiDAR scan to a location uncritical for the current sub processing step. The proposed approach may avoid issues resulting from aggregation-related artifacts in automatic tools such as object detectors, as well as in manual processes such as annotating data, without having to change those tools themselves.

There are two main scenarios for the present invention which take advantage of shifting the scanning discontinuity in LiDAR generated 3D point clouds, namely applying machine learning (ML) algorithms, such as object detectors, to a scene represented by LiDAR data aggregated into a 3D point cloud, and when manually annotating such a scene.

With reference to Fig. 3, a method according to the invention for object detection in a three-dimensional, 3D, point cloud representing a scanned surrounding of a vehicle is shown. In step 310, a first plurality of scanning samples (412) representing the scanned surrounding is determined, wherein the first plurality of scanning samples (412) consists of a first half (412a) of scanning samples and a second half (412b) of scanning samples. In step 320, the 3D point cloud is populated with the first plurality of scanning samples (412). In object detection step 330, objects in the 3D point cloud that are contained in one or more of the second half of scanning samples are detected.

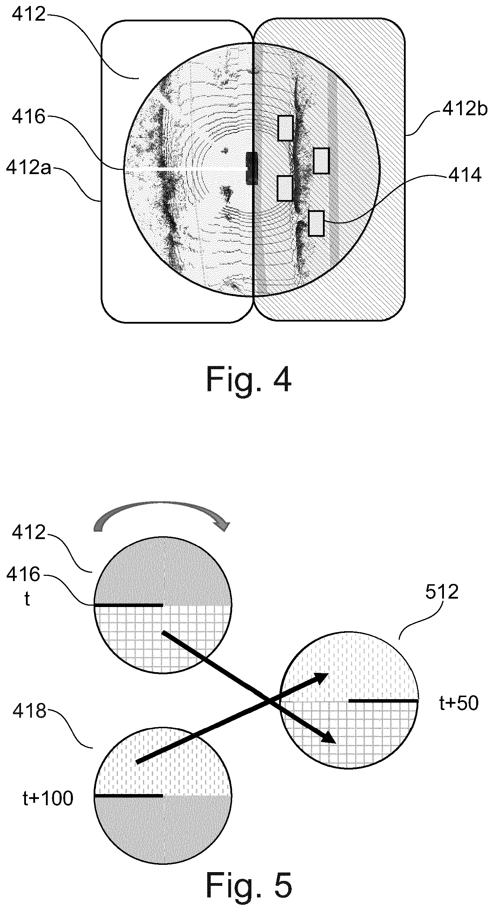

With reference to Fig. 4, the first plurality of scanning samples 412 consisting of a first half 412a of scanning samples and a second half 412b of scanning samples is shown. While the 3D point cloud is populated with all scanning samples contained in the first plurality of scanning samples 412, the object detection step 330 is only performed on the second half 412b of scanning samples.

This approach may be advantageous, as a LiDAR scan typically comprises a scanning discontinuity 412. More particularly, in an embodiment a scanning discontinuity 416 is present in the first plurality of scanning samples 412, located in the first half 412a of the scanning samples (i.e., the left half of the scanning samples in Fig. 4) between a first scanning sample and a last scanning sample. Hence, it is advantageous to perform object detection only in the second half 412b of the scanning samples (i.e., the right half of the scanning samples in Fig. 4) which is unaffected by the scanning discontinuity 416.

Further with reference to Fig. 3, the method further comprises determining (340) a second plurality of scanning samples 418 which were acquired by a LiDAR sensor immediately after the first plurality of scanning samples 412. The method further comprises populating 350 the 3D point cloud with a restitched plurality of scanning samples 512. The restitched plurality of scanning samples 512 consists of a subset of the first plurality of scanning samples 412 and a subset of the second plurality of scanning samples 418. As a result, the location of the scanning discontinuity 416 in the restitched plurality of scanning samples 512 is shifted by an angle *theta* compared to the first plurality of scanning samples 412. More particularly, depending on the angle *theta,* the shifted scanning discontinuity 416 is located in a first half or in a second half of the restitched plurality of scanning samples 512. The method further comprises a step 360 of detecting objects in the 3D point cloud that are contained in one or more of the one half of the restitched plurality of scanning samples 512 which is unaffected by the scanning discontinuity 416.

Fig. 5 shows an example of the proposed restitching of two consecutively recorded LiDAR scans 412 and 418. Assuming the LiDAR scans recorded by a LiDAR sensor have a frame rate of 10 fps, every scan starts 100 ms after the previous scan. The scanning discontinuity 416 in the first plurality of scans 412 is shown on the left side of the scene. Because the LiDAR sensor is continuously scanning to produce the aggregated LiDAR scan, the end of the first scan (i.e., first plurality of scanning samples 412) is just before t=100 and immediately precedes the beginning of the second scan (i.e., second plurality of scanning samples 418) which is just after t=100.

Therefore, a subset of the first plurality of scanning samples 412, e.g., the lower half as shown in Fig. 5, can be appended with a subset of the second plurality of scanning samples 418 to create a new valid LiDAR scan, i.e., a restitched plurality of scanning samples 512 as shown on the right of Fig. 5. This restitched LiDAR scan, i.e. the restitched plurality of scanning samples 512 as shown on the right in Fig. 5, will (artificially) start at t=50, the midpoint between the other two frames, and the scanning discontinuity 416 will move to the other side of the scene (righthand side).

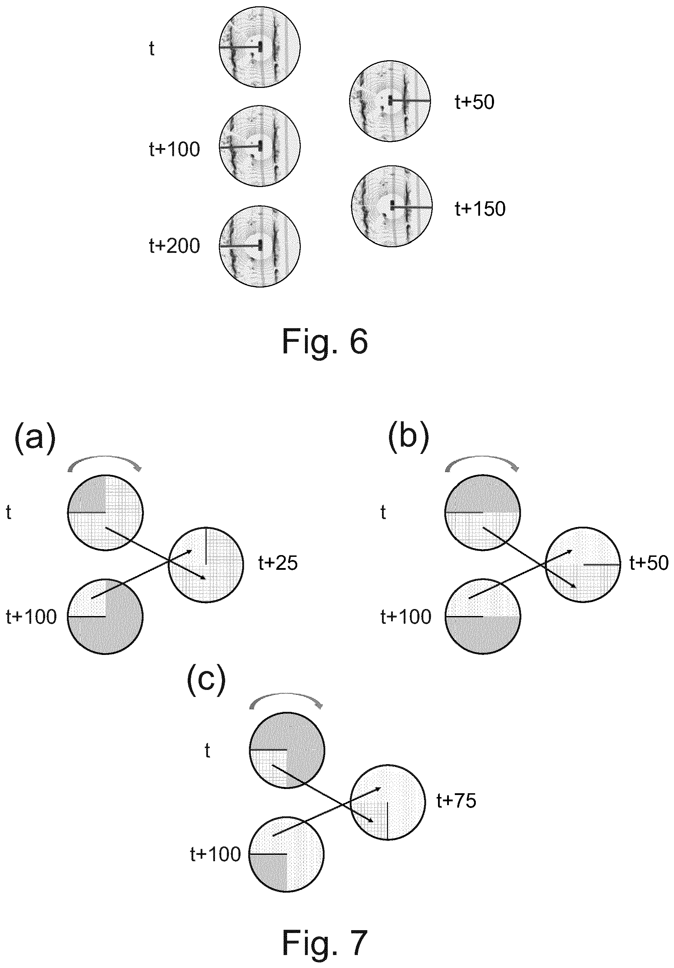

This process can be continued as shown in Fig. 6, e.g., by stitching the second, lower half of the second frame and the first, upper half of the third frame to create a new frame at t=150, and so on for an entire sequence of LiDAR scans, resulting in a new series of LiDAR scans where the scanning discontinuity 416 is shifted and then located at the righthand side instead of the left.

Similarly, by changing the subset, or proportion, of data taken from the first and second pluralities of scanning samples (i.e., the first and second frames of the LiDAR scan), series of LiDAR 3D point clouds can be created where the scanning discontinuity is shifted to an arbitrary location.

More specifically, according to an embodiment, each of the first plurality of scanning samples 412 and the second plurality of scanning samples 418 is assigned a measurement time, i.e., the time at which the respective sample was measured. The subset of the scanning samples in the first plurality of scanning samples 412 has an assigned measurement time greater or equal to $t {1}_{start} + \left(t{2}_{start}-t{1}_{start}\right) ∗ \left(\frac{theta}{360}\right) ,$ and the subset of the scanning samples in the second plurality of scanning samples 418 has an assigned measurement time less than $t {2}_{start} + \left(t{3}_{start}-t{2}_{start}\right) ∗ \left(\frac{theta}{360}\right) ,$ wherein:
*t*1_*start* denotes the measurement time of the first scanning sample of the first plurality of scanning samples 412,
*t*2*_start* denotes the measurement time of the first scanning sample of the second plurality of scanning samples 418,
*t*3*_start* denotes the measurement time of a first scanning sample of a third plurality of scanning samples, wherein the third plurality of scanning samples were acquired immediately after the second plurality of scanning samples 418, and
the angle *theta* is specified in degrees.

In the examples shown in Figs. 5 and 6, the angle *theta* is 180°. Fig. 7 shows further examples, with Fig. 7 (a) showing an example with *theta =* 90°, Fig. 7 (b) showing an example with *theta =* 180°, and Fig. 7 (c) showing an example with *theta* = 270°.

The proposed step of preprocessing thus allows to dynamically restitch a sequence of LiDAR scans in such a way that the scanning discontinuity as contained in any LiDAR scan would not hinder further processing of the aggregated LiDAR measurements, e.g., manual annotations and existing LiDAR perception algorithms, such as object detectors, segmentation algorithms, etc.

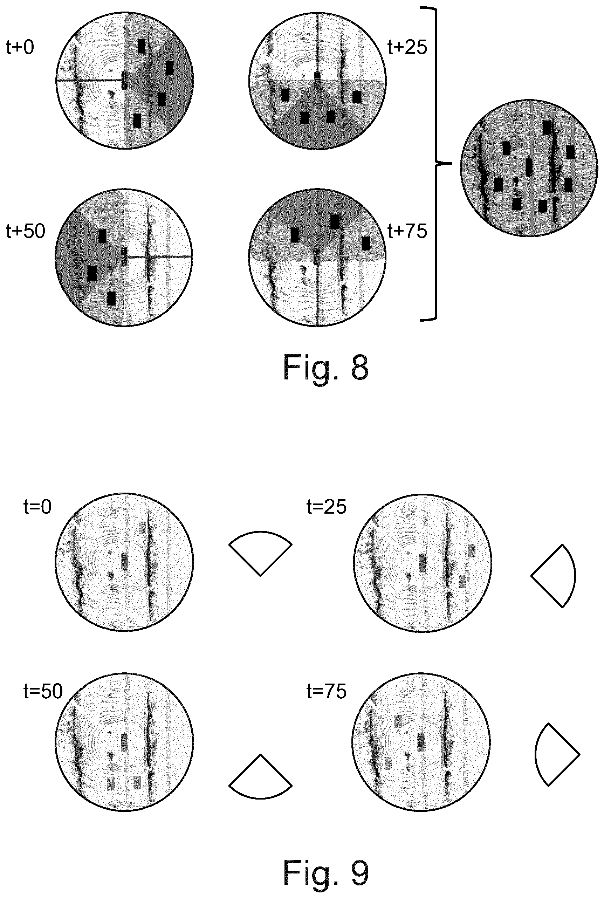

In a further embodiment, only a portion of the one half of the restitched plurality of scanning samples 512 which is unaffected by the scanning discontinuity 416 is considered for detecting objects. An example of a corresponding object detection is shown in Fig. 8. Fig. 8 shows a first LiDAR scan (top left) with the scanning discontinuity located on the left hand side of the scene. Object detection is performed in only a portion of the unaffected half of the LiDAR scan on the right hand side of the scene. In the shown embodiment, the portion covers a 90° cone in the center of the one half of the restitched plurality of scanning samples which is unaffected by the scanning discontinuity. While Fig. 8 shows an example embodiment with a 90° cone, any cone width within the half of the restitched plurality of scanning samples is possible, as long as a certain buffer is present around the cone.

Fig. 8 further shows a sequence of restitched LiDAR scans, wherein the scanning discontinuity is first shifted by 90° to (artificial) start time t=25 ms (top right of Fig. 8), then by 180° to (artificial) start time t=50 ms (lower left of Fig. 8), and then by 270° to (artificial) start time t=75 ms (lower right of Fig. 8). For each restitched LiDAR scan, objection detection is performed in a 90° cone in the center of the one half of the respective restitched plurality of scanning samples which is unaffected by the scanning discontinuity.

When using only half of the determined 3D point cloud, i.e., of the restitched plurality of scanning samples, boundary effects may be encountered at the edge of the half, such as cropped objects. The embodiment allows to circumvent such boundary effects, as object detection is applied on the complete half which is unaffected by the scanning discontinuity, but only detections within a 90-degree cone in the center of the halved plurality of scanning samples are considered. This neatly divides the scanned scene into four 90-degree cones which comprise the entire scene as captured by the LiDAR sensor. It also leaves enough of a "scene buffer" around each cone so that an automatic object detector does not have to deal with cropped objects, and also has enough scene context around objects to properly detect them. It is worth noticing that adjacent quadrants are based on the same 3D point cloud segments, i.e., they are compatible and consistent with respect to objects detected at the border between two quadrants. Specifically, the effects described above for the scanning discontinuity do not occur at the quadrants border.

In one embodiment, the detected objects are aggregated into a set of detected objects, as shown in Fig. 8 in the right hand representation of the determined 3D point cloud, comprising all objects as detected in the respective restitched plurality of scanning samples. In this embodiment, each of the detected objects aggregated into the set of detected objects is assigned a common point in time.

Fig. 9 shows an alternative embodiment, wherein objects are detected in alternating quadrants. In other words, the respective objects as detected in each portion of the plurality of restitched scanning samples are treated separately. As a result of the object detections alternating between the quadrants, each object is assigned a separate point in time, i.e., in this embodiment, each of the detected objects is assigned a point in time corresponding to a point in time at which the restitched plurality of scanning samples in the respective portion were obtained. A separate tracker would be needed to combine these separate detections into a coherent world view. By keeping the detections from each quadrant separate, and assigning a common time only to object within a quadrant rather than the whole scene, the time mismatch between a detection and the actual measurement time would be reduced. This would at least partially mitigate the sensor fusion problem as discussed in the context of Fig. 2.

In some embodiments of the present invention, the detecting of objects is automatically performed, e.g., using an object detection algorithm. Most state-of-the-art object detection algorithms for analyzing LiDAR data are based on convolutional neural networks, and as such require processing a sizable portion of the scene at once, in order to make use of the convolutions, and also to determine context for the detected objects. These algorithms are therefore particularly sensitive to the above discussed discontinuity of a LiDAR scan. The restitching of LiDAR scans and the shifting of the scanning discontinuity within the restitched LiDAR scans according to the present invention allows to apply existing off-the-shelf object detection algorithms which were not designed to handle LiDAR data comprising a scanning discontinuity.

Alternatively or in addition, in some embodiments a scene represented by the LiDAR data is manually annotated, i.e., the detecting of objects is performed by a user during an annotating process. ML-based approaches for object detection in LiDAR 3D point clouds typically use training data annotated by human labelers. In most approaches, labelers observe the entire scene via, e.g., some front-end tool and mark out the objects of interest. When annotating aggregated LiDAR data, human labelers are susceptible to a similar problem as that of detection algorithms, as LiDAR data, i.e., scanning samples in the vicinity of the scanning discontinuity may contain duplicate, missing, or partial objects.

According to the present invention, to overcome such problems, the LiDAR data in a 3D point cloud is dynamically restitched in the above described manner while a human labeler is manually annotating the scene, in order to prevent the labeler from annotating regions close to the scanning discontinuity. The proposed restitching of scanning samples and shifting of the scanning discontinuity is done in real-time, either manually (e.g., by providing a slider control that allows the labeler to shift the scanning discontinuity away from the area he/she is focusing on) or automatically (e.g., by tracking the labeler's cursor and restitching the scanning samples so that the scanning discontinuity is never near the area being annotated).

Accordingly, in an embodiment, user input is received by an annotating user, and the angle *theta* is selected in response to the user input. In particular, the angle *theta* may be selected such that the scanning discontinuity is shifted away from the one half of the restitched plurality of scanning samples in which the user is performing object detection. In an embodiment, the user input comprises shifting of a slider in a user interface, and selecting the angle *theta* based on the shifting.

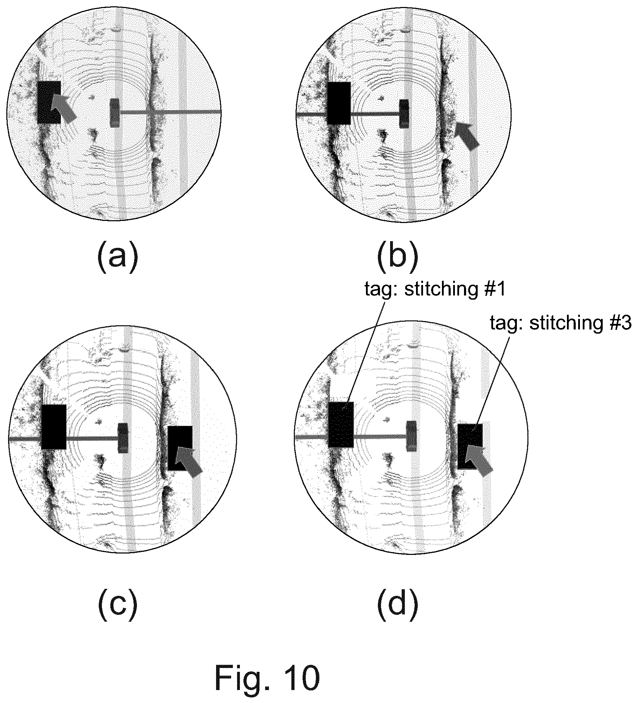

Fig. 10 shows an example of a corresponding annotating process, according to embodiments. In the scene shown in Fig. 10 (a), the annotating user has identified an object in the left half of the scene and is pointing to the object with the cursor. As can be seen, the scanning discontinuity in the plurality of scanning samples of the shown LiDAR scan is located in the right half. As shown in Fig. 10 (b), the annotating user may then focus on the right half of the scene, i.e., by moving the cursor into the right half. As a result of the user input, the scanning discontinuity is shifted away from the right half of the restitched plurality of scanning samples in which the user is performing object detection, i.e., the scanning discontinuity is shifted to the left hand side of the scene. As shown in Fig. 10 (c), the user may then tag the object identified in the right hand side of the scene. As a result of the shown manual annotating process, two objects are tagged, wherein the two objects have been identified by the user in different restitched LiDAR scans, each time avoiding the scanning discontinuity.

In summary, the present invention proposes a preprocessing step for 3D point clouds aggregated by 360 degree sweeps of a LiDAR sensor. Preprocessing an aggregated 3D point cloud and running an object detector multiple times on separate parts prevents known object detectors from encountering aggregation-related scan artifacts which may be present at the aggregation discontinuity line in the LiDAR data, denoted as scanning discontinuity. Applying object detectors individually to multiple (overlapping) parts of such preprocessed 3D point clouds allows to reduce a timing mismatch between the reported time of an object and its actual measurement time. Applying the proposed preprocessing step in real-time during manual scene annotation allows a human annotator to label a 360-degree scene without encountering aggregation-related scan artifacts which may be present in the vicinity of the scanning discontinuity.

The various embodiments described above are provided by way of illustration only and should not be construed to limit the invention. Those skilled in the art will readily recognize various modifications and changes that may be made to the present invention without following the example embodiments and applications illustrated and described herein, and without departing from the scope of the present disclosure.

## Claims

1. A computer-implemented method for object detection in a three-dimensional, 3D, point cloud representing a scanned surrounding of a vehicle, the method comprising:
determining (310) a first plurality of scanning samples (412) representing the scanned surrounding, the first plurality of scanning samples (412) consisting of a first half (412a) of scanning samples and a second half (412b) of scanning samples;
populating (320) the 3D point cloud with the first plurality of scanning samples (412); and
detecting (330) objects (414) in the 3D point cloud contained in one or more of the second half (412b) of scanning samples,
**characterized in that**:
a scanning discontinuity (416) is present in the first half (412a) of the scanning samples between a first scanning sample and a last scanning sample, wherein the scanning discontinuity (416) is a line where the first scanning sample is adjacent to the last scanning sample,
wherein the method further comprises:
determining (340) a second plurality of scanning samples (418);
populating (350) the 3D point cloud with a restitched plurality of scanning samples (512), the restitched plurality of scanning samples (512) consisting of a subset of the first plurality of scanning samples (412) and a subset of the second plurality of scanning samples (418),
wherein the location of the scanning discontinuity (416) in the restitched plurality of scanning samples (512) is shifted by an angle *theta* compared to the first plurality of scanning samples (412), and
detecting (360) objects in the 3D point cloud contained in one half of the restitched plurality of scanning samples (512) which is unaffected by the scanning discontinuity (416).

2. The method of claim 1, wherein
each of the first plurality of scanning samples (412) and the second plurality of scanning samples (418) is assigned a measurement time, and
the subset of the scanning samples in the first plurality of scanning samples (412) has an assigned measurement time greater or equal to a first value, and
the subset of the scanning samples in the second plurality of scanning samples (418) has an assigned measurement time less than a second value.

3. The method of claim 1 or 2, wherein only a portion of the one half of the restitched plurality of scanning samples (512) which is unaffected by the scanning discontinuity (416) is considered for detecting objects.

4. The method of claim 3, wherein the portion covers a 90° cone in the center of the one half of the restitched plurality of scanning samples (512) which is unaffected by the scanning discontinuity (416).

5. The method of any of the preceding claims, wherein detected objects are aggregated into a set of detected objects.

6. The method of any the preceding claims, wherein each of the detected objects is assigned a common point in time.

7. The method of any of claims 3 to 5, wherein each of the detected objects is assigned a point in time corresponding to a point in time at which the restitched plurality of scanning samples (512) in the respective portion were obtained.

8. The method of any of the preceding claims, wherein the detecting of objects is automatically performed using an object detection algorithm.

9. The method of any of claims 1 to 7, wherein the detecting of objects is performed by a user during an annotating process.

10. The method of claim 9, further comprising:
receiving a user input by the user, and
selecting the angle *theta* in response to the user input.

11. The method of claim 10, wherein the angle *theta* is selected such that the scanning discontinuity (416) is shifted away from the one half of the restitched plurality of scanning samples (512) in which the user is performing object detection.

12. The method of claim 10, wherein the user input comprises shifting of a slider in a user interface, and wherein the angle *theta* is selected based on the shifting.

13. A system comprising means for performing the steps of any of claims 1 to 12.

14. A computer-readable storage medium comprising instructions which, when executed by a computer, cause the computer to carry out the method of any of claims 1 to 12.

## Patentansprüche

1. Ein Computerimplementiertes Verfahren zur Objekterkennung in einer dreidimensionalen, 3D, Punktwolke, die eine abgetastete Umgebung eines Fahrzeugs darstellt, das Verfahren umfassend:
Bestimmen (310) einer ersten Vielzahl von Abtastproben (412), die die abgetastete Umgebung darstellen, wobei die erste Vielzahl von Abtastproben (412) aus einer ersten Hälfte (412a) von Abtastproben und einer zweiten Hälfte (412b) von Abtastproben besteht;
Füllen (320) der 3D Punktwolke mit der ersten Vielzahl von Abtastproben (412); und
Erkennen (330) von Objekten (414) in der 3D Punktwolke, die in einer oder mehreren der zweiten Hälfte (412b) von Abtastproben enthalten sind, **dadurch gekennzeichnet, dass**:
eine Abtastdiskontinuität (416) in der ersten Hälfte (412a) der Abtastproben zwischen einer ersten Abtastprobe und einer letzten Abtastprobe vorhanden ist, wobei die Abtastdiskontinuität (416) eine Linie ist, wo die erste Abtastprobe an die letzte Abtastprobe angrenzt,
wobei das Verfahren ferner umfasst:
Bestimmen (340) einer zweiten Vielzahl von Abtastproben (418);
Füllen (350) der 3D Punktwolke mit einer neu zusammengefügten Vielzahl von Abtastproben (512), wobei die neu zusammengefügte Vielzahl von Abtastproben (512) aus einer Teilmenge der ersten Vielzahl von Abtastproben (412) und einer Teilmenge der zweiten Vielzahl von Abtastproben (418) besteht,
wobei die Position der Abtastdiskontinuität (416) in der neu zusammengefügten Vielzahl von Abtastproben (512) um einen Winkel *theta* im Vergleich zu der ersten Vielzahl von Abtastproben (412) verschoben ist, und
Erkennen (360) von Objekten in der 3D Punktwolke, die in einer Hälfte der neu zusammengefügten Vielzahl von Abtastproben (512) enthalten sind, die von der Abtastdiskontinuität (416) unbeeinflusst ist.

2. Das Verfahren nach Anspruch 1, wobei
jeder der ersten Vielzahl von Abtastproben (412) und der zweiten Vielzahl von Abtastproben (418) eine Messzeit zugewiesen ist, und
die Teilmenge der Abtastproben in der ersten Vielzahl von Abtastproben (412) eine zugewiesene Messzeit aufweist, die größer oder gleich einem ersten Wert ist, und
die Teilmenge der Abtastproben in der zweiten Vielzahl von Abtastproben (418) eine zugewiesene Messzeit aufweist, die kleiner als ein zweiter Wert ist.

3. Das Verfahren nach Anspruch 1 oder 2, wobei nur ein Abschnitt der einen Hälfte der neu zusammengefügten Vielzahl von Abtastproben (512), der von der Abtastdiskontinuität (416) unbeeinflusst ist, zum Erkennen von Objekten berücksichtigt wird.

4. Das Verfahren nach Anspruch 3, wobei der Abschnitt einen 90° Kegel in der Mitte der einen Hälfte der neu zusammengefügten Vielzahl von Abtastproben (512) abdeckt, der von der Abtastdiskontinuität (416) unbeeinflusst ist.

5. Das Verfahren nach einem der vorhergehenden Ansprüche, wobei erkannte Objekte zu einem Satz von erkannten Objekten aggregiert werden.

6. Das Verfahren nach einem der vorhergehenden Ansprüche, wobei jedem der erkannten Objekte ein gemeinsamer Zeitpunkt zugewiesen wird.

7. Das Verfahren nach einem der Ansprüche 3 bis 5, wobei jedem der erkannten Objekte ein Zeitpunkt zugewiesen wird, der einem Zeitpunkt entspricht, zu dem die neu zusammengefügte Vielzahl von Abtastproben (512) in dem jeweiligen Abschnitt erhalten wurde.

8. Das Verfahren nach einem der vorhergehenden Ansprüche, wobei das Erkennen von Objekten automatisch unter Verwendung eines Objekterkennungsalgorithmus durchgeführt wird.

9. Das Verfahren nach einem der Ansprüche 1 bis 7, wobei das Erkennen von Objekten durch einen Benutzer während eines Annotierungsprozesses durchgeführt wird.

10. Das Verfahren nach Anspruch 9, ferner umfassend:
Empfangen einer Benutzereingabe durch den Benutzer, und
Auswählen des Winkels *theta* als Reaktion auf die Benutzereingabe.

11. Das Verfahren nach Anspruch 10, wobei der Winkel *theta* so ausgewählt wird, dass die Abtastdiskontinuität (416) von der einen Hälfte der neu zusammengefügten Vielzahl von Abtastproben (512), in der der Benutzer Objekterkennung durchführt, weg verschoben wird.

12. Das Verfahren nach Anspruch 10, wobei die Benutzereingabe das Verschieben eines Schiebers in einer Benutzerschnittstelle umfasst, und wobei der Winkel *theta* basierend auf dem Verschieben ausgewählt wird.

13. Ein System, umfassend Mittel zum Durchführen der Schritte nach einem der Ansprüche 1 bis 12.

14. Ein computerlesbares Speichermedium, umfassend Anweisungen, die, wenn sie von einem Computer ausgeführt werden, den Computer veranlassen, das Verfahren nach einem der Ansprüche 1 bis 12 durchzuführen.

## Revendications

1. Un procédé implémenté par calculateur pour une détection d'objets dans un nuage de points tridimensionnel, 3D, représentant un environnement scanné d'un véhicule, le procédé comprenant :
la détermination (310) d'une première pluralité d'échantillons de scan (412) représentant l'environnement scanné, la première pluralité d'échantillons de scan (412) étant constituée d'une première moitié (412a), d'échantillons de scan et d'une seconde moitié (412b) d'échantillons de scan ;
le remplissage (320) du nuage de points 3D par la première pluralité d'échantillons de scan (412) ; et
la détection (330) dans le nuage de points 3D d'objets (414) contenus dans un ou plusieurs de la seconde moitié d'échantillons de scan,
**caractérisé en ce que** :
une discontinuité de scan (416) est présente dans la première moitié (412a) des échantillons de scan entre un premier échantillon de scan et un dernier échantillon de scan, la discontinuité de scan (416) étant une ligne où le premier échantillon de scan est adjacent au dernier échantillon de scan,
dans lequel le procédé comprend en outre :
la détermination (340) d'une seconde pluralité d'échantillons de scan (418) ;
le remplissage (350) du nuage de points 3D par une pluralité raccordée d'échantillons de scan (512), la pluralité raccordée d'échantillons de scan (512) étant constituée d'un sous-ensemble de la première pluralité d'échantillons de scan (412) et d'un sous-ensemble de la seconde pluralité d'échantillons de scan (418),
dans lequel l'emplacement de la discontinuité de scan (416) dans la pluralité raccordée d'échantillons de scan (512) est décalée d'un angle *thêta* par rapport à la première pluralité d'échantillons de scan (412) ; et
la détection (360) dans le nuage de points 3D d'objets contenus dans une moitié de la pluralité raccordée d'échantillons de scan (512) qui n'est pas affectée par la discontinuité de scan (416).

2. Le procédé de la revendication 1, dans lequel :
à chacun de la première pluralité d'échantillons de scan (412) et de la seconde pluralité d'échantillons de scan (418) est attribué un temps de mesure, et
le sous-ensemble des échantillons de scan de la première pluralité d'échantillons de scan (412) ont un temps de mesure attribué qui est supérieur ou égal à une première valeur, et
le sous-ensemble des échantillons de scan de la seconde pluralité d'échantillons de scan (418) ont un temps de mesure attribué qui est inférieur à une seconde valeur.

3. Le procédé de la revendication 1 ou 2, dans lequel seule une partie de la première moitié de la pluralité raccordée d'échantillons de scan (512) qui n'est pas affectée par la discontinuité de scan (416) est considérée pour la détection d'objets.

4. Le procédé de la revendication 3, dans lequel la partie couvre un cône de 90° au centre de ladite une moitié de la pluralité raccordée d'échantillons de scan (512) qui n'est pas affectée par la discontinuité de scan (416).

5. Le procédé de l'une des revendications précédentes, dans lequel les objets détectés sont agrégés en un ensemble d'objets détectés.

6. Le procédé de l'une des revendications précédentes, dans lequel à chacun des objets détectés est attribué un même moment dans le temps.

7. Le procédé de l'une des revendications 3 à 5, dans lequel à chacun des objets détectés est attribué un moment dans le temps correspondant à un moment dans le temps auquel avaient été obtenus la pluralité raccordée d'échantillons de scan (512) dans la partie respective.

8. Le procédé de l'une des revendications précédentes, dans lequel la détection d'objets est effectué automatiquement à l'aide d'un algorithme de détection d'objets.

9. Le procédé de l'une des revendications 1 à 7, dans lequel la détection d'objets est effectuée par un utilisateur au cours d'un processus d'annotation.

10. Le procédé de la revendication 9, comprenant en outre :
la réception d'une entrée utilisateur par l'utilisateur, et
la sélection de l'angle thêta en réponse à l'entrée utilisateur.

11. Le procédé de la revendication 10, dans lequel l'angle *thêta* est choisi de telle manière que la discontinuité de scan (416) soit décalée en éloignement de ladite une moitié de la pluralité raccordée d'échantillons de scan (512) dans laquelle l'utilisateur effectue la détection d'objets.

12. Le procédé de la revendication 10, dans lequel l'entrée utilisateur comprend le décalage d'un curseur dans une interface utilisateur, et dans lequel l'angle *thêta* est choisi sur la base du décalage.

13. Un système comprenant des moyens pour mettre en œuvre les étapes de l'une des revendications 1 à 12.

14. Un support lisible par calculateur comprenant des instructions qui, lorsqu'elles sont exécutées par un calculateur, font en sorte que le calculateur mette en œuvre le procédé de l'une des revendications 1 à 12.
